# EUROPÄISCHE PATENTSCHRIFT

(11) **EP 2 539 296 B1**
(45) Veröffentlichungstag und Bekanntmachung des Hinweises auf die Patenterteilung: **19.07.2017**
(21) Anmeldenummer: 11710418.2
(22) Anmeldetag: 23.02.2011
(51) Int. Cl.: C04B 28/00, C04B 28/24, C04B 35/634, C04B 35/66, C04B 35/82, C04B 111/28

(54) **PLASTISCHE FEUERFESTE MASSE UND FEUERFESTER MÖRTEL**
PLASTIC REFRACTORY MATERIAL AND REFRACTORY MORTAR
PÂTE RÉFRACTAIRE PLASTIQUE ET MORTIER RÉFRACTAIRE

(30) Priorität: 24.02.2010 DE 102010009146
(43) Veröffentlichungstag der Anmeldung: 02.01.2013
(73) Patentinhaber: TDH - GmbH Technischer Dämmstoffhandel, 20539 Hamburg (DE)
(72) Erfinder: ANGENENDT, Rainer, 46509 Xanten (DE); GENTH, Peer, 15834 Rangsdorf (DE)
(74) Vertreter: Schoenen, Norbert
(86) Internationale Anmeldenummer: PCT/EP2011/000869
(87) Internationale Veröffentlichungsnummer: WO 2011/104005

(56) Entgegenhaltungen:
- EP-A1- 1 508 602
- CN-A- 1 583 656
- CN-A- 101 628 819
- DE-A1-102004 020 889
- US-A- 4 446 040
- US-A- 4 664 712
- US-A1- 2002 117 087
- DATABASE WPI Week 200826 Thomson Scientific, London, GB; AN 2008-D56159 XP000002656827, & CN 1 995 246 A (YAO H) 11. Juli 2007 (2007-07-11)
- DATABASE WPI Week 199108 Thomson Scientific, London, GB; AN 1991-056148 XP000002656828, & SU 1 551 700 A (MINSK CONS MATERIAL) 23. März 1990 (1990-03-23)

## Beschreibung

Die Erfindung betrifft eine plastische feuerfeste Masse oder einen feuerfesten Mörtel, die bei Trocknung erhärten und mindestens einen Leichtfüllstoff, ein Bindemittel, Fasern und/oder Wollastonit sowie Wasser enthalten, für Anwendungen bis ca. 1000 °C.

Unter dem Begriff Leichtfüllstoffe sind hier hochschmelzende mineralische Granulate niedriger Dichte zu verstehen, zum Beispiel geblähte Vulkanasche, Blähperlit usw.

### Stand der Technik

Bekannt sind Mörtelmischungen zur Herstellung und Reparatur von feuerfesten Formteilen, die Fasern und Leichtfüllstoffe enthalten. Bekannte Mörtel und auch plastische Massen für Temperaturen bis 1000°C und höher haben erheblich höhere Dichten und schrumpfen bei Trocknung, wodurch feine Risse entstehen können.

### Isolierungen für Transporttiegel für flüssiges Metall in der Gießereitechnik nach dem Stand der Technik

Recycling-Unternehmen für Aluminium-Schrott verarbeiten die angelieferten Materialien unter anderem zu Aluminium-Gusslegierungen, die von den Auftraggebern genau spezifiziert werden. Die Lieferung erfolgt zum Teil in flüssiger Form. Nach dem Einschmelzen und Mischen aller Komponenten wird das Aluminium in spezielle, isolierte Transport-Warmhaltetiegel gegossen, welche die Aushärtung (das Einfrieren) des Aluminiums um mehrere Stunden verzögern.

Die Anforderungen an die Genauigkeit der Herstellungs- und Logistikprozesse sind enorm. Je nach Vorgabe des Kunden dürfen die Legierungen nur minimal von den definierten Eigenschaften abweichen. Deshalb müssen Verunreinigungen, z. B. durch Metallanlagerungen an den Innenwänden der Tiegel, ausgeschlossen werden. Die Folge: Die Tiegel werden in bestimmten Abständen und in Abhängigkeit von der bisherigen Nutzung gereinigt und gewartet, was einen hohen Zeit-, Energie- und damit Kapitalaufwand bedeutet.

Die bisherige Innenisolation sowohl der Deckel der Transporttiegel als auch der Transporttiegel selbst wird mit einer Betoninnenschale und Hinterisolierung erreicht, die aus verschiedenen Gründen nach ein bis maximal drei Jahren erneuert werden muss. Bei dieser turnusmäßigen Erneuerung der Betonisolierung ergeben sich Ausfallzeiten von 3 - 4 Wochen pro Tiegel. Die Wartungskosten, die durch die ständige und fortlaufende Erneuerung der Innenisolation der Tiegel entstehen, sind erheblich.

Zwischen dem aus Stahl bestehenden Außenmantel und der Betoninnenschale ist nach dem Stand der Technik eine Wärmedämmung in Form von Calciumsilicat und Kombinationen aus Calciumsilikat und mikroporösen Dämmstoffen angebracht. Die Innenseite des Außenmantels des Transporttiegels wird mit Calciumsilicat-Platten verkleidet, wobei die Wärmedämmplatten möglichst dicht und fugenlos aneinander liegen sollen. Auf diese Wärmedämmschicht wird dann flüssiger Beton aufgebracht, welcher die Betoninnenschale bildet. Durch die hohe Temperatur bei der Verwendung des Transporttiegels und der ungleichmäßigen Hinterisolierung entstehen in der Betoninnenschale im Laufe der Zeit Risse, durch die das flüssige Aluminium bis zur Wärmedämmschicht sickert. Da es nicht möglich ist, eine nahtlose Calciumsilicat-Wärmedämmschicht herzustellen, sickert das flüssige Aluminium weiter durch die Fugen aneinander grenzender Wärmedämmplatten nach außen. Eine weitere Vergrößerung der Risse sowie eine Temperaturerhöhung der Außenwand auf unzulässig hohe Werte ist die Folge. Mikroporöse Dämmstoffe saugen flüssiges Aluminium auf und werden dadurch zerstört.

Die deutsche Offenlegungsschrift DE 10 2007 012 489 A1 beschreibt ausschließlich isolierende und exotherme Speiser aus der Gießereitechnik. Speiser ist ein Begriff aus der Gießereitechnik und bezeichnet geometrische Angusskörper an Gussteilen, in deren Form das Lunkervolumendefizit bei der Gussteilerstarrung platziert werden soll und welche im Putzvorgang der Gussteile wieder entfernt werden. Die Speiser selbst werden bei diesem Vorgang zerstört (Einwegteile).

Ein Speiser hat die Aufgabe, die Lunkerbildung (Hohlräume) in einem Gussteil zu vermeiden, und hat weitere unterschiedliche Aufgaben in einer Gießform:
- Steuerung der Erstarrungsrichtung der vergossenen Schmelze (möglichst gerichtet zum Speiser hin)
- Ausgleich der Verringerung des spezifischen Volumens der vergossenen Schmelze während des Phasenübergangs Flüssig/Fest
- Entlüftung der Gussform während des Gießvorgangs (Ausnahme: Blindspeiser) "Speiser-Varianten": Naturspeiser, Isolierspeiser, Exothermspeiser: Durch Isolierung bzw. zusätzliches Aufheizen der Speiser nach dem Gießvorgang können die Speiserabmessungen kleiner gehalten werden, was zu einer Materialeinsparung (besseres Gussteilausbringen) führt.

Die in der DE 10 2007 012 489 A1 beschriebenen exothermen Speiser enthalten thermitähnliche Abmischungen, die sehr gefährlich sind und in einigen Fabriken zu extremen Bränden geführt haben. Die Thermitreaktion ist eine Redoxreaktion, bei der Aluminium als Reduktionsmittel benutzt wird, um z.B. Eisen(III)-oxid zu Eisen zu reduzieren. Das Gemisch wird Thermit genannt:

Fe₂O₃ + 2 Al -> 2 Fe + Al₂O₃

Die Reaktionsprodukte sind Aluminiumoxid und elementares Eisen. Die Reaktion läuft sehr stark exotherm ab, also unter starker Wärmeentwicklung. Als Zündmittel wird Bariumperoxid mit Magnesium benutzt.

Thermitgemische sind kein Explosivstoff und lassen sich nur durch eine sehr große Wärmezufuhr (Aktivierungsenergie) zur Umsetzung (Entzündung) bringen. Der Brennvorgang ist eine stark exotherme Reaktion (bis zu 3000 °C). Da brennendes Thermit keinen externen Sauerstoff benötigt, kann die Reaktion nicht erstickt werden und in jeder Umgebung - auch unter Sand oder Wasser - gezündet werden und weiterbrennen. Löschversuche mit Wasser sowie Feuchtigkeit führen zu einer weiteren Redoxreaktion, in der das Wasser von den unedleren Metallen reduziert wird und so Metalloxid und Wasserstoff entstehen:

2 Al + 3 H₂O -> 3 H₂ + Al₂O₃

2 Fe + 3 H₂O -> 3 H₂ + Fe₂O₃

Die Anwesenheit von Wasser stellt daher eine große Gefahr bei der Thermitreaktion dar und führt zum explosionsartigen Ausschleudern glutflüssiger Stoffe sowie zu explosionsfähigen Wasserstoff-Sauerstoff-Mischungen (Knallgas). Thermitgemische müssen daher trocken gelagert werden.

Die in der DE 10 2007 012 489 A1 in Abs. [0053] und [0054] aufgeführten Rezepturen haben einen Wassergehalt von ca. 1,5 bis 2,5 %. Es handelt sich also um pulverförmige Abmischungen, die offensichtlich ausschließlich für das Kernschießverfahren hergestellt werden.

In der Kernschießmaschine wird mit Bindemittel versetzter Formgrundstoff mit einem bestimmten Schießdruck und eventuell definierter Arbeitstemperatur in eine Kernform (den "Kernkasten") eingebracht. Nach dem Aushärten bzw. Vorhärten des so hergestellten Gusskerns wird dieser in die Gießform eingebaut. Je nach dem für das Aushärten des Formstoffes beigemischten Bindemittel kommen so genannte Coldbox- oder Hotbox-Kernschießmaschinen zum Einsatz.

Die Abmischungen in der vorliegenden Patentanmeldung enthalten erheblich mehr Wasser. In der Rezeptur ist der Wassergehalt mindestens 10 Gew.-% und größer. Die Abmischungen in der vorliegenden Patentanmeldung entsprechen daher von ihrer Konsistenz Stampfmassen oder plastischen Massen.

Die in der DE 10 2007 012 489 A1 aufgeführten Bindemittel sind ausschließlich Thermoplaste. Thermoplaste, auch Plastomere genannt, sind Kunststoffe, die sich in einem bestimmten Temperaturbereich (thermo-plastisch) verformen lassen. Dieser Vorgang ist reversibel, das heißt, er kann durch Abkühlung und Wiedererwärmung bis in den schmelzflüssigen Zustand beliebig oft wiederholt werden, solange nicht durch Überhitzung die sogenannte thermische Zersetzung des Materials einsetzt.

Thermoplaste werden vor allem im Spritzgießverfahren verarbeitet, welches ähnlich ist dem in der DE 10 2007 012 489 A1 beschriebenen Kernschießverfahren. Zu den Thermoplasten zählen z. B.: Acrylnitril-Butadien-Styrol (ABS), Polyamide (PA), Polylactat (PLA), Polymethylmethacrylat (PMMA), Polycarbonat (PC), Polyethylenterephthalat (PET), Polyethylen (PE), Polypropylen (PP), Polystyrol (PS), Polyetheretherketon (PEEK) und Polyvinylchlorid (PVC). Der am längsten bekannte Thermoplast ist Celluloid.

Keinesfalls sind die Eigenschaften von thermoplastischen Bindemitteln mit den in der vorliegenden Patentanmeldung beschriebenen Hybridbindemitteln zu vergleichen, die die Festigkeit über einen großen Temperaturbereich gewährleisten müssen.

Ein Brennen der in der DE 10 2007 012 489 A1 beschriebenen Produkte ist nicht möglich. Sie würden zerfallen oder sich mit Thermit entzünden und verbrennen. Eine Nutzung ist danach nicht mehr möglich.

Die Reduzierung der Emission in der DE 10 2007 012 489 A1 wird nur zum Schutz der Gussform, aber nicht der Umwelt oder zur Vermeidung von Brandgefahren etc. durchgeführt. Die Emission ist erheblich höher als in unseren Produkten. In den Mischungen der DE 10 2007 012 489 A1 werden als Leichtfüllstoff nur feuerfeste Cenospheren aus SiO₂ (gibt es aber tatsächlich nicht), Al₂O₃ (gibt es in der genannten Körnung nicht) und Aluminiumsilikat beschrieben, jedoch keine Fasern und keine geblähte Vulkanasche etc, wie in der vorliegenden Patentanmeldung.

Die in der DE 10 2007 012 489 A1 dargestellten Produkte lassen sich für die in der vorliegenden Patentanmeldung dargestellten Anwendungen aufgrund ihrer Eigenschaften nicht einsetzen. Die Erfindung ist deshalb aus der DE 10 2007 012 489 A1 nicht nahegelegt.

Die US 2002/117087 A1 zeigt eine pastöse feuerfeste Masse, verwendbar zur Unterstützung des Brandschutzes, enthaltend 10,2 Gew.-% einer Kieselsäure, 1,8 Gew.-% eines Polymerbindemittels (Zucker), 10,2 Gew.-% Feuerton (enthält normalerweise meistens Kaolin), 0,5 Gew.-% Glasfaser und 39,3 Gew.-% Leichtfüllstoff (geblähtes Perlit).

Die US 4 446 040 A zeigt eine pastöse feuerfeste Klebemasse, enthaltend 12 - 13 Gew.-% einer Kieselsäure, 0,2 Gew.-% eines Polymerbindemittels (Methylzellulose), 2,4 Gew.-% Kaolin, 1,0 Gew.-% organische Faser und 48 Gew.-% Perlit.

Das Dokument DATABASE WPI, Week 200826, Thomson Scientific, London, GB; AN 2008-D56159, XP000002656827 & CN 1 995 246 A zeigt eine pastöse feuerfeste Klebemasse, enthaltend 10 - 50 Gew.-% einer Kieselsäure (Natrium-Metasilikat), 0,1 - 15 Gew.-% eines Polymerbindemittels (Methylphenylsiloxan), 1 - 10 Gew.-% Siliciumdioxid (Diatom), 5 - 40 Gew.-% geblähtes Perlit, 0,1 - 10 Gew.-% Kaolin, 0,2 - 8 Gew.-% Aluminiumsilikatfaser und 1 - 10 Gew.-% Ti-Pigment.

Das Dokument DATABASE WPI, Week 199108, Thomson Scientific, London, GB; AN 1991-056148, XP000002656828 & SU 1 551 700 A zeigt eine pastöse feuerfeste Klebemasse, enthaltend 29 - 36 Gew.-% einer Kieselsäure (Natriumsilikat), zwei verschiedene Polymerbindemittel, 0,8 - 0,9 Gew.-% Zellulose und 0,5 - 0,8 Gew.-% Natriumalkylsilikonat, 53,7 - 64,7 Gew.-% geblähtes Perlit, 3,7 - 6,8 Gew.-% Kaolin und 1,3 - 2 Gew.-% organische Faser.

Die US 4 664 712 A zeigt eine plastische feuerfeste Masse, verwendbar zur thermischen Isolation, enthaltend 26,3 Gew.-% einer Kieselsäurelösung, 0,3 Gew.-% eines Polymerbindemittels (Silikon), 10,2 Gew.-% Kaolin, 1,2 Gew.-% Nylonfaser und 52,3 Gew.-% Leichtfüllstoff (geblähtes Perlit).

Die CN 101 628 819 A zeigt eine pastöse feuerfeste Klebemasse, die zur Herstellung einer Faserplatte verwendet wird, enthaltend 21 - 40 Gew.-% einer Kieselsäure (Silikasol), zwei verschiedene Polymerbindemittel, 0,3 - 0,5 Gew.-% Polyacrylamid und 2 - 6 Gew.-% Polyaluminiumchlorid, 4 - 7 Gew.-% geblähtes Perlit, 1 - 10 Gew.-% Kaolin und 25 - 55 Gew.-% Aluminiumsilikatfaser.

Die CN 1 583 656 A zeigt eine pastöse feuerfeste Klebemasse, enthaltend 5 Gew.-% einer Kieselsäure (Wasserglas), zwei verschiedene Polymerbindemittel, insgesamt 25 Gew.-% Polylatex und Polyvinylalkohol, 42 Gew.-% geblähtes Perlit, 20 Gew.-% Kaolin und 7 Gew.-% Glasfaser.

Aus der DE 10 2004 020889 A1 ist es bekannt, die Oberfläche des Perlits oder die Oberflächen aller Komponenten zusammen zu hydrophobieren.

Es ist aus der EP 1 508 602 A1 bekannt, polymere Bindemittel auf Acrylatbasis für plastische Klebemassen zu verwenden.

### Aufgabe der Erfindung und deren Lösung

Der Erfindung liegt die Aufgabe zugrunde, eine plastische feuerfeste Masse und einen feuerfesten Mörtel der eingangs genannten Art zur kostengünstigen vollflächigen Verfüllung von zu dämmenden Bereichen zu entwickeln, die nur einen äußerst geringen Schrumpf bei einer Trocknung bis zur Klassifizierungstemperatur von ca. 1000 °C zeigt, eine Rohdichte von nur 200 bis 300 kg/m³ und eine Klassifizierungstemperatur von etwa 1000 °C haben. Der Schrumpf bei einer Trocknung bis zur Temperatur von maximal 1000 °C soll zumindest kleiner als 0,5 % liegen.

Diese Aufgabe wird bei der plastischen feuerfesten Masse und dem feuerfesten Mörtel der eingangs genannten Art erfindungsgemäß durch die Merkmale des Anspruchs 1 gelöst.

Die Wasserschutzschicht erhöht die Beständigkeit der Vulkangesteins-Partikel in wässrigen Medien und damit die Lagerbeständigkeit der Masse bzw. des Mörtels. Weitere Vorteile der erfindungsgemäßen plastischen feuerfesten Masse und des feuerfesten Mörtels ergeben sich aus den Ausführungen weiter unten.

In der vorliegenden Anmeldung wird "feinteilig" nicht im Sinne einer bestimmten kleinen Korngröße, sondern im Sinne von "pulverförmig" oder "granular" im Gegensatz zu "stückig" verwendet. Es kommt also nicht auf eine spezielle Korngröße oder Korngrößenverteilung an.

Im Folgenden wird die Bedeutung und Funktion der einzelnen Komponenten der plastischen Masse erläutert. Der Gehalt an Fasern dient zum Zusammenhalt der Masse im feuchten Zustand. Das Hybridbindemittel sorgt für den Zusammenhalt nach Trocknung bei Temperaturen bis etwa 200 °C aufgrund des organischen Bestandteils und bei höheren Temperaturen durch die Sinterung der Kieselsäurepartikel. Das eingesetzte Kaolin und das Kieselsol sind ebenfalls ein Bindemittel, welches bei erhöhter Temperatur seine Funktion entfaltet, und dient außerdem bei verschiedenen Anwendungen der plastischen Masse als Abdichtung gegen flüssiges Aluminium durch den Kaolingehalt. Die Leichtfüllstoffe sorgen für das notwendige Volumen und für eine relativ niedrige Rohdichte im Vergleich zum Stand der Technik.

Vorteilhafte Ausgestaltungen der Erfindung sind in den Unteransprüchen angeführt.

Die Mikrohohlkörper sind oberflächenbehandelt, um sie gegen Wasserangriff in den plastischen Massen und Mörteln zu schützen, wodurch die Massen lagerbeständig werden.

Ferner betrifft die Erfindung die Verwendung der eingangs genannten Masse für verschiedene vorteilhafte Anwendungen entsprechend dem Anspruch 4.

Als Leichtfüllstoff wird geblähtes zelluläres Vulkangestein in Form nichtporöser Hohlgranulate eingesetzt. Bei porösen Hohlgranulate würde sich dagegen die Rohdichte erhöhen, mehr Kleber und mehr Mineralien wären erforderlich, die Massen würden stumpfer und wären damit schlechter zu verarbeiten und die Porosität des Endproduktes würde sich deutlich erhöhen, was ein Nachteil bezüglich des unerwünschten Einsickerns von zum Beispiel Aluminium wäre.

Erfindungsgemäß ist die Masse nach dem Erhärten äußerst stabil, zeigt selbst bei 1000 °C praktisch keinen Schrumpf, keine äußeren oder innere Risse und kein Zerbröseln und ist für Dauertemperaturen bis 1000 °C geeignet.

Kaolin, auch als Porzellanerde oder Aluminiumsilikat bezeichnet, ist ein feines, eisenfreies, weißes Gestein, das als Hauptbestandteil Kaolinit, ein Verwitterungsprodukt des Feldspats, enthält.

Das eingesetzte Kaolin bedeckt als Film den hoch schmelzenden Leichtfüllstoff und bildet bereits bei Trocknung eine feste Struktur. Die Festigkeit der Struktur und der Schrumpf bei Temperaturen bis 1000°C wird durch das Verhältnis Kaolin/Kieselerde/Kieselsol und deren Verteilung beeinflusst.

Ein weiterer Vorteil des eingesetzten Gemischs von Kaolin/Kieselerde/Kieselsol liegt darin, dass die Masse nach dem Erhärten hart und mechanisch stabil ist.

Die hohe mechanische Stabilität ohne Schrumpf bei Temperaturen oberhalb von 900 °C wird erfindungsgemäß durch das Zusammenwirken der wesentlichen Komponenten
- hoch schmelzender Leichtfüllstoff, (T > 950°C)
- Kaolin, Kieselerde, Kieselsol
- keramische oder andere hochschmelzende Fasern
erreicht.

Vorgeschlagen wird außerdem, dass eine Bindemittelmischung aus mehreren Bindemitteln mit einer Bindewirkung in unterschiedlichen Temperaturbereichen eingesetzt wird.

Die Innovation des erfindungsgemäßen Produktes besteht insbesondere darin, dass geeignete, sich ergänzende Bindemittel-Systeme eingesetzt werden, z. B. das Hybridbindemittel, welches die Stützkonstruktionen aus Fasern bereits bei der Trocknung unter Raumtemperatur mit den Leichtfüllstoffen (geblähte Vulkangesteine) ausreichend vernetzen, um die Struktur bis oberhalb 900 °C zu fixieren. Durch mineralische Bindemittel, z. B. Kaolin, die bereits enthalten sind, sowie die im Hybridbindemittel enthaltende Kieselsäure wird diese Struktur ab ca. 900 °C so ausreichend stark verstärkt, dass bei den jeweiligen angestrebten Anwendungstemperaturen ebenfalls kein Schrumpfen erfolgt.

Besonders innovativ ist dabei, dass sich die unterschiedlichen Bindemittel und das hoch schmelzende mineralische Granulat hinsichtlich der bei Temperaturerhöhung erfolgende Verfestigung dieser Materialien so ergänzen, dass ein formstabiles und gewichtskonstantes Produkt mit unterschiedlich einstellbaren Strukturen, Dichten und Festigkeiten bis zu der maximalen Anwendungstemperatur entsteht.

Ein zentraler Kundennutzen beim Einsatz der erfindungsgemäßen Produkte liegt darin, dass neben dem gewünschten Ziel einer effizienten Hochtemperaturisolierung eine signifikante Kostenersparnis im Bereich der Opportunitätskosten für die Kunden realisiert werden kann. Die Senkung dieser Kosten wird vornehmlich durch die Verbesserung der Energiebilanz und auch der Ökobilanz durch Emissionsreduktion für den Kunden erreicht.

Weitere wichtige Vorteile der erfindungsgemäßen Produkte:
- Nicht brennbar
- Geringes Gewicht
- Hohe Temperaturbeständigkeit
- Niedrige Wärmeleitfähigkeit
- Gute Festigkeitseigenschaften
- Einfache Montage und Verarbeitung
- Viele Kombinationsmöglichkeiten
- geringe Rauchgasentwicklung
- geringe Geruchsentwicklung
- Geringe Alkalität
- Nicht hygroskopisch
- Chemikalienbeständig
- Gutes elektrisches Isoliervermögen
- Recyclebar
- Deponiefähig

Perlit (englisch: perlite) bezeichnet in den Geowissenschaften ein alteriertes (chemisch und physikalisch umgewandeltes) vulkanisches Glas (Obsidian) und zählt damit zu den Gesteinen. Die so genannte perlitische Struktur wird hier durch etwa erbsengroße Glaskügelchen gebildet. Perlit enthält bis zu 2 % Wasser und hat eine Dichte von etwa 900 bis 1000 kg/m³ (Schüttdichte des Rohperlit). Durch Glühen auf ca. 800°C bis 1000 °C bläht sich Perlit auf das fünfzehn- bis zwanzigfache seines Ursprungsvolumens auf und hat dann eine Schüttdichte von 50 bis 100 kg/m³ und eine Wärmeleitfähigkeit von λ = 0,040 bis 0,070 W/mK.

Erfindungsgemäß sind diese Perlite wegen der Porosität nicht einsetzbar.

Erfindungsgemäß geeignet sind dagegen Mikrozellular expandierte Vulkangesteine, nach neuen umweltschonenden und energiesparenden Verfahren hergestellt, erzielen Eigenschaften und technische Werte, die es von älteren, porig expandierten Vulkangesteinen ("expandierten Perliten") unterscheidet. Mikrozellulares, expandiertes Vulkangestein ist ein Füllstoff aus der Gruppe der Aluminiumsilikate und setzt sich aus kugeligen ("Bienenwabenstruktur"), stäbchenförmigen und flockigen Teilchen zusammen, woraus hohe Packungsdichten und höhere Verbundsfestigkeiten als bei herkömmlichen Mikrohohlkugeln durch mechanische und kohäsive Bindungskräfte resultieren. Gezielte Oberflächenbeschichtungen ermöglichen einen vorteilhaften Verbund mit der anorganischen bzw. organischen Matrix. Hieraus resultiert weniger Schwund und bessere technische Eigenschaften. Kommerziell erhältlich ist geblähtes imprägniertes Perlit z. B. unter dem Handelsnamen NOBLITE® (Produkt der Fa. NOBLITE, Route de Claye, F-77181 LE PIN, Frankreich)und Technoperl® (Produkt der Europerl Deutschland, D-94032 Passau, Nibelungenplatz 4).

### Erfingdungsgemäß eingesetzte Fasern

Insbesondere werden keramische und/oder mineralische hochschmelzende Fasern und/oder organische hochschmelzende Fasern, zum Beispiel Kohlefasern, eingesetzt. Wollastonit ist auch möglich.

Bei Keramikfasern oder keramischen Fasern handelt es sich um Fasern aus anorganischem, nicht-metallischem Material. Ursprünglich sind nur polykristalline anorganische Werkstoffe als keramisch bezeichnet worden. Inzwischen gibt es aber aus verschiedenen Polymeren, sogenannten Precursoren, durch Pyrolyse hergestellte amorphe Fasern, die auf Grund ihrer Eigenschaften als keramische Fasern bezeichnet werden. Die Abgrenzung zu ebenfalls amorphen Glasfasern, die nicht zu den keramischen Fasern gezählt werden, ist am besten durch den Herstellprozess möglich (Glasfasern aus Glasschmelze, amorphe Keramikfasern aus polymeren Vorstufen durch Pyrolyse). Die keramischen Fasern werden in oxidische und nicht-oxidische eingeteilt.

An oxidischen Keramikfasern sind Fasern auf der Basis von Aluminiumoxid und Siliciumdioxid in unterschiedlichen Anteilen und zum Teil noch mit zusätzlichem Boroxid oder Zirkonoxid bekannt. Mischoxidfasern aus 85 % Al₂O₃ und 15 % SiO₂ werden auch als Mullitfasern bezeichnet. Alle diese Fasern sind polykristallin.

An nichtoxidischen, industriell hergestellten Fasern (außer den Kohlenstofffasern) sind verschiedene Typen von Siliciumcarbidfasern bekannt. Ausgangspolymere sind fast ausschließlich sogenannte Poly-Carbosilane. Es handelt sich hierbei um Polymere aus Kohlenwasserstoffen, in denen einzelne Kohlenstoff- durch Siliciumatome oder Silane, in denen einzelne Silicium- durch Kohlenstoffatome ersetzt worden sind. Durch Zusätze werden die Polymere in einem Härtungsprozess vernetzt, damit sie nach dem Spinnprozess bei der Pyrolyse nicht einfach verdampfen, sondern - wie bei der Herstellung von Kohlenstofffasern - in eine amorphe, meist nicht-stöchiometrische, noch freien Kohlenstoff enthaltende SiC-Keramikfaser umgewandelt werden. Bei speziellen Herstellverfahren ist auch die Herstellung sehr feinkristalliner und reiner SiC-Fasern mit deutlich verbesserten Hochtemperatureigenschaften möglich.

### Erfindungsgemäße Verwendung

Erfindungsgemäß_wird die erfindungsgemäße Mörtelmischung zum Brandschutz und/oder zur Wärmedämmung verwendet, insbesondere als Hochtemperaturdämmstoff, als Füllmasse zum Abdichten von Hohlräumen oder zum Verspachteln von Wandflächen und/oder zur Isolierung von schwer zugänglichen oder unsymmetrischen Stellen und/oder zur Wärmedämmung und Brandabschottung bei Durchführungsöffnungen in Brandschutzwänden wie Rohr- und Kabeldurchführungen bei erhöhter Temperaturbeanspruchung.

Die Anwendungsfelder sind der industrielle Ofenbau, die Gießereitechnik, der Schiffbau, der industrielle Kraftwerks- und Anlagenbau, der Schienenfahrzeugbau, der Hochbau und die technische Wärme-Isolierung.

Insbesondere ist die erfindungsgemäße plastische Masse für die o. g. Aluminium-Transporttiegel geeignet. Erfindungsgemäße Lösung des Problems: Die bisherige Betoninnenschale und Hinterisolierung der Tiegel und Tiegeldeckel für den Transport von flüssigem Aluminium wird substituiert durch eine durchgehende homogene erfindungsgemäße Isolierung ohne Fugen. Da Kaolin ein Trennmittel für flüssiges Aluminium ist, verhindert der Kaolingehalt der erfindungsgemäßen Isolierung zusätzlich das Durchsickern von flüssigem Aluminium.

Aus den verschiedenen Anwendungs- und Verarbeitungsmöglichkeiten der erfindungsgemäßen Mörtelmischung ergibt sich eine enorme Anzahl von Einsatzmöglichkeiten, die hier, ohne Anspruch auf Vollständigkeit, stichpunktartig zusammengefasst werden:
- Kabel-/Rohrabschottungen,
- Fugenabdichtungen,
- Verschließen von Löchern und Rissen in Wänden und Decken,
- Brandschutzabdichtungen,
- Feuerschutzklappen,
- Feuerschutztüren,
- Speiser für Gießereitechnik,
- Beschichtungen für Auspuffanlagen, Hitzeschutzschilder, Elektrogeräte, Motoren, Öfen und Grillgeräte,
- Isolierung / Reparatur von Kaminen,
- Isolierung von Steckdosen, Deckenleuchten, Schaltern, Sicherungskästen,
- Isolierung von Industrieofenanlagen und Feuerungsanlagen,
- Isolierung von Haushaltsgeräten (Mikrowelle, Cerankochfeld, Backöfen),
- Wand- und Deckenbeschichtungen
- Transporttiegel,
- Spritzputz an Stahlbetonkonstruktionen,
- Spritzputzbekleidungen

### Erfindungsgemäß eingesetztes Hybridbindemittel

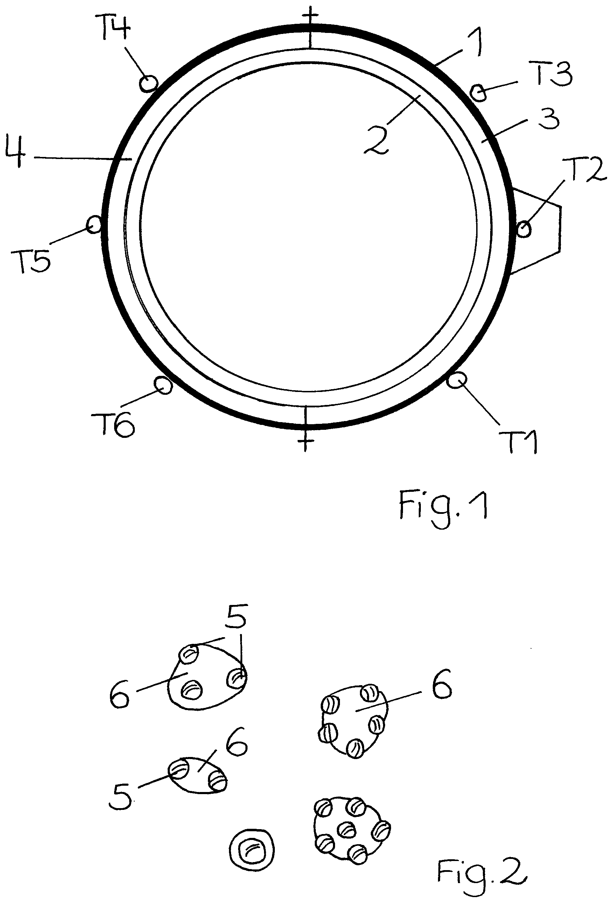

Vorzugsweise wird ein organisch-anorganisches Hybridbindemittel eingesetzt, welches unter dem Handelsnamen COL.9 der Firma BASF erhältlich ist. Es enthält 50 bis 100 nm große zusammengesetzte Partikel, welche amorphe Kieselsäurepartikel 5 und ein Polymer 6 auf der Basis von n-Butylacrylat und Methylmethacrylat enthalten (siehe Figur 2). Die Partikel sind in Wasser dispergiert. Durch die Klebrigkeit der Partikel aufgrund des Polymergehaltes erhält man ein ausgezeichnetes Bindemittel für niedrige Temperaturen, etwa bis 200 °C. Bei erhöhten Temperaturen zersetzt sich der Polymeranteil und die Kieselsäurepartikel bleiben übrig und damit die Struktur erhalten, wobei die Kieselsäurepartikel bei einer entsprechend hohen Temperatur ebenfalls ein festes Gerüst bildet. Ein Schrumpf tritt daher weder bei niedriger noch bei erhöhter Temperatur auf. Das Bindemittel hat einen Festkörpergehalt von etwa 35 bis 40 Gew.-%. Der Silicatanteil, bezogen auf den Feststoffgehalt, beträgt 30 bis 50 Gew.-%.

### Erfindungsgemäß eingesetzte Kieselerde

Erfindungsgemäß_wird eine oberflächenbehandelte Kieselerde eingesetzt. Unter Kieselerde versteht man ein inniges Gemisch von feinteiliger Kieselsäure und Kaolinit. Bekannt ist zum Beispiel die Neuburger Kieselerde, die erfindungsgemäß bevorzugt eingesetzt wird. Für die bessere Benetzbarkeit mit Wasser ist die Kieselerde mit einem Silan behandelt, so dass die einzelnen Partikel eine funktionelle hydrophile Oberfläche erhalten.

Erhältlich ist eine derartige aktivierte Kieselerde unter dem Handelsnamen "AKTISIL EM" der Firma Hoffmann Mineral GmbH, Neuburg (Donau). Hier ist die Kieselerde mit 3-Epoxipropyloxipropyltrimethoxisilan behandelt. Diese so genannte aktivierte Kieselerde kann in Pulverform eingesetzt werden. Möglich ist erfindungsgemäß aber auch der Einsatz eines Gemisches von Kieselsäuresol und Kaolin/Kaolinit.

### Herstellungsbeispiele und Beispielrezepturen

Sämtliche flüssige Komponenten der Rezeptur werden genau eingewogen und vorsichtig unter Vermeidung von Schaumbildung miteinander vermischt. Hier haben sich in der Praxis einfache Zahnscheibenrührer bewährt.

Die genau abgewogenen Fasern werden in kleinen Einheiten gleichmäßig dieser Mischung zugefügt, durch Verrühren (bei niedriger Drehzahl) zerrupft und vollständig mit der wässrigen Lösung benetzt.

Danach werden die genau abgewogenen Leichtfüllstoffe und Mineralien untereinander in einem Freifallmischer gemischt und unter gleichmäßigem Rühren der Mischung in einen Zwangsmischer (z.B. Firma BEBA) zugeführt. Beide Vormischungen werden unter gleichmäßigem langsamem Rühren ca. 45 min miteinander vermengt. Hohe Scherkräfte, Druck und Reibung sind weitestgehend zu vermeiden um die mikrozellular geblähten Vulkangesteine nicht zu beschädigen.

Die Leichtfüllstoffe sollten vollständig benetzt sein und einen gleichmäßigen lockeren Mörtel beziehungsweise eine plastische Masse ergeben.

### Rezeptur 1 für 100 kg Mörtel

| | |
|---|---|
| Wasser | 50 kg |
| Mineralwolle (z.B. Rockwool lose Wolle) | 5 kg |
| Hybrid-Bindemittel (COL 9 von BASF) | 5 kg |
| Hydrophob ausgerüstete geblähte mikrozelluläre Vulkangesteine (z.B. Noblite 200 EC) | 30 kg |
| Kieselerde(z.B. Aktilsil EM von Hoffmann-Minerals) | 8 kg |
| Tensidlösung 2% (z.B. Tegopren 5840 von Evonik) | 2 kg |

### Rezeptur 2 für 100 Kg Plastische Masse

| | |
|---|---|
| Wasser | 46 kg |
| Mineralwolle (z. B. Rockwool lose Wolle) | 5 kg |
| Hybrid-Bindemittel (COL 9 von BASF) | 5 kg |
| Hydrophob ausgerüstete geblähte mikrozelluläre Vulkangesteine | 30 kg |
| Kaolin z.B. Chinafill 800 der Amberger Kaolinwerke | 6 kg |
| Kieselsol (z.B. Levasil 200A/30 von Akzo NobelChemicals) | 6 kg |
| Tensidlösung 2% (z.B. Tegopren 5840 von Evonik) | 2 kg |

### Vergleichsversuche

Versuche mit einem Tiegel für flüssiges Aluminium ergaben eine deutlich bessere Wärmedämmung beim Einsatz des erfindungsgemäßen Materials anstelle der Wärmedämmung mit den Calciumsilicatplatten nach dem Stand der Technik. Einen Querschnitt durch einen solchen Tiegel zeigt Figur 1. Zu erkennen ist der Außenmantel 1, welcher aus Stahl besteht, die Betoninnenschale 2 und die Wärmedämmschicht 3, bestehend aus dem erfindungsgemäßen Material, und die Wärmedämmschicht 4, bestehend aus der üblichen Calciumsilicat-Isolierung. Die Zeichen T1 bis T6 bezeichnen die Temperaturmesspunkte. Die gemessenen Temperaturen des Außenmantels 1 lagen bei Verwendung der erfindungsgemäßen plastischen Masse um etwa 7 °C niedriger als bei Verwendung der bekannten Calciumsilicatplatten 4. Außerdem wird durch die nahtlose Verarbeitung des erfindungsgemäßen Materials und die überwiegende Geschlossenzelligkeit ein Durchdringen des flüssigen Aluminiums durch die Isolierung an die Außenwand 1 langfristig verhindert.

Auch andere Versuche in anderen Tiegeln für flüssiges Aluminium zeigen den Vorteil der erfindungsgemäßen Masse. Die Tiegel verschleißen weit weniger als bei Verwendung herkömmlichen Dämmmaterials. Die Rissbildung in der Verschleißschicht 2 aus Beton ist nach wie vor äußerst gering.

## Patentansprüche

1. Plastische feuerfeste Masse oder feuerfester Mörtel, die bei Trocknung erhärten und mindestens einen Leichtfüllstoff, ein Bindemittel, Fasern und/oder Wollastonit sowie Wasser enthalten,
wobei man als Leichtfüllstoff geblähte geschlossenzellige Vulkanasche einsetzt, die mit einer oberflächlichen Wasserschutzschicht ausgerüstet ist,
wobei als Bindemittel ein anorganisch-organisches Hybrid-Bindemittel eingesetzt wird, welches Kieselsäure und ein organisches Polymer enthält, wobei das Hybrid-Bindemittel Partikel enthält, die wiederum aus amorphen Kieselsäurepartikeln (5) zusammengesetzt sind, die als Bindemittel ein Polymer (6) auf Acrylatbasis enthalten,
und wobei die Masse oder der Mörtel Kaolin oder Kaolinit und Siliciumdioxid enthält,
wobei eine modifizierte Kieselerde eingesetzt wird, die Kieselsäure-Kaolinit-Partikel enthält, deren Oberfläche mit einem Netzmittel, insbesondere einem Silan beschichtet ist,
wobei die plastische feuerfeste Masse oder der feuerfeste Mörtel die folgende Zusammensetzung hat
| | |
|---|---|
| Leichtfüllstoff | 20 bis 40 Gew.-% |
| Hybrid-Bindemittel | 1 bis 6 Gew.-% |
| Fasern | 2 bis 8 Gew.-% |
| modifizierte Kieselerde | 3 bis 15 Gew.-% |
| Rest | Wasser. |

2. Plastische feuerfeste Masse oder feuerfester Mörtel nach Anspruch 1,
**dadurch gekennzeichnet,**
**dass** das Polymer (6) auf Acrylatbasis n-Butylacrylat und Methylmethacrylat enthält.

3. Plastische feuerfeste Masse oder feuerfester Mörtel nach Anspruch 1,
**dadurch gekennzeichnet,**
**dass** eine einheitliche Art von Fasern oder ein Gemisch unterschiedlicher Fasern, insbesondere mineralische Fasern, mit einem Erweichungspunkt von mindestens 950 °C eingesetzt werden.

4. Verwendung der plastischen feuerfesten Masse oder des feuerfesten Mörtels nach Anspruch 1 als Hochtemperaturdämmstoff, zum Brandschutz und/oder zur Wärmedämmung.

5. Verwendung nach Anspruch 4,
**dadurch gekennzeichnet,**
**dass** die Masse oder der Mörtel als Füllmasse zum Abdichten von Hohlräumen oder zum Verspachteln von Wandflächen und/oder zur Isolierung von schwer zugänglichen oder unsymmetrischen Stellen und/oder zur Wärmedämmung und Brandabschottung bei Durchführungsöffnungen in Brandschutzwänden wie Rohr- und Kabeldurchführungen bei erhöhter Temperaturbeanspruchung verwendet wird.

## Claims

1. Plastics refractory material or refractory mortar, which hardens when dried and contains at least one lightweight filler, a binder, fibres and/or wollastonite, and water,
wherein blown closed-cell volcanic ash that is provided with a superficial waterproof layer is used as the lightweight filler,
wherein an inorganic-organic hybrid binder that contains silica and an organic polymer is used as the binder,
wherein the hybrid binder contains particles, which in turn are composed of amorphous silica particles (5) that contain an acrylate-based polymer (6) as the binder,
and wherein the material or mortar contains kaolin or kaolinite and silicon dioxide,
wherein a modified siliceous earth is used that contains the silica-kaolinite particles and of which the surface is coated with a wetting agent, in particular a silane,
wherein the plastics refractory material or the refractory mortar has the following composition:
| | |
|---|---|
| lightweight filler | 20 to 40 wt.% |
| hybrid binder | 1 to 6 wt.% |
| fibres | 2 to 8 wt.%, |
| modified siliceous earth | 3 to 15 wt.% |
| rest | water. |

2. Plastics refractory material or refractory mortar according to claim 1, **characterised in that** the acrylate-based polymer (6) contains n-butyl acrylate and methyl methacrylate.

3. Plastics refractory material or refractory mortar according to claim 1, **characterised in that** a single type of fibres or a mixture of different fibres, in particular mineral fibres, having a softening point of 950 °C are used.

4. Use of the plastics refractory material or the refractory mortar according to claim 1 as a high-temperature insulating material for fireproofing and/or thermal insulation.

5. Use according to claim 4, **characterised in that** the material or the mortar is used as a filler material for sealing cavities or for filling wall surfaces and/or for insulating locations that are difficult to access or asymmetrical and/or for providing thermal insulation and fireproof sealing for feedthrough openings in fire walls such as pipe feedthroughs and cable feedthroughs that are exposed to increased temperature stress.

## Revendications

1. Pâte plastique réfractaire ou mortier réfractaire qui durcit au séchage et qui contient au moins une matière de charge légère, un liant, des fibres et/ou de la wollastonite ainsi que de l'eau,
dans laquelle des cendres volcaniques expansées à cellules fermées sont utilisées sous la forme d'une matière de charge légère, laquelle est pourvue d'une couche superficielle de protection contre l'eau ;
dans laquelle un liant hybride anorganique et organique est utilisé sous la forme d'un liant, lequel contient de l'acide silicique et un polymère organique ;
dans laquelle le liant hybride contient des particules qui sont composées à leur tour de particules amorphes de l'acide silicique (5) qui contiennent un polymère (6) à base d'acrylate faisant office de liant ; et
dans laquelle la pâte ou le mortier contient du kaolin ou de la kaolinite et du dioxyde de silicium ;
dans laquelle une silice modifiée est utilisée, laquelle contient des particules d'acide silicique et de kaolinite et dont la surface est revêtue d'un agent mouillant, en particulier d'un silane ; dans laquelle la pâte plastique réfractaire ou le mortier réfractaire possède la composition suivante :
| | |
|---|---|
| matière de charge légère : | 20 à 40 % en poids ; |
| liant hybride : | 1 à 6 % en poids ; |
| fibres : | 2 à 8 % en poids ; |
| silice modifiée | 3 à 5 % en poids |
| reste : | eau. |

2. Pâte plastique réfractaire ou mortier réfractaire selon la revendication 1, **caractérisée en ce que** le polymère (6) à base d'acrylate contient du n-acrylate de butyle et du méthacrylate de méthyle.

3. Pâte plastique réfractaire ou mortier réfractaire selon la revendication 1, **caractérisée en ce que** un type unitaire de fibres ou un mélange de différentes fibres, en particulier des fibres minérales, avec un point de ramollissement d'au moins 950 °C, sont utilisées.

4. Utilisation de la pâte plastique réfractaire ou du mortier réfractaire selon la revendication 1 sous la forme d'un matériau isolant contre les hautes températures, à des fins de protection incendie et/ou à des fins d'isolation thermique.

5. Utilisation selon la revendication 4, **caractérisée en ce que** la pâte ou le mortier est employé(e) sous la forme d'une pâte de remplissage à des fins de colmatage d'interstices ou à des fins de masticage de surfaces murales et/ou à des fins d'isolation de zones non symétriques ou difficiles d'accès et/ou à des fins d'isolation thermique et de cloisonnement anti incendie pour les ouvertures de traversée dans les cloisons coupe-feu, telles que des traversées de câbles et de tuyaux, pour une contrainte de température accrue.
